# EUROPEAN PATENT APPLICATION

(11) **EP 1 645 331 A1**
(43) Date of publication of application: **12.04.2006**
(21) Application number: 04747604.9
(22) Date of filing: 15.07.2004
(51) Int. Cl.: B01J 27/24, B01D 53/86, B01J 31/02, B01J 32/00, C01B 31/10, D01F 9/18

(54) **HAZARDOUS SUBSTANCE DECOMPOSER AND PROCESS FOR PRODUCING THE SAME**

(30) Priority: 16.07.2003 JP 2003275337
(71) Applicant: Shinano Kenshi Kabushiki Kaisha, Nagano 386-0498 (JP)
(72) Inventor: HASHIZUME, Hitoshi, c/o Shinano Kenshi K. K., Chiisagata-dun, Nagano 386-0498 (JP); SHIMIZU, Makoto, c/o Shinano Kenshi K. K., Chiisagata-gun, Nagano 386-0498 (JP); YAWATA, Tomio, c/o Shinano Kenshi K. K., Chiisagata-gun, Nagano 386-0498 (JP); KIMURA, Mutsumi, c/o Functional Polymer Science, Ueda-shi, Nagano 3868567 (JP)
(74) Representative: Calderbank, Thomas Roger
(86) International application number: PCT/JP2004/010138
(87) International publication number: WO 2005/007287

(57) **Abstract**

The present invention provides a harmful substance decomposer excelling in the capability of decomposing harmful substances. The harmful substance decomposer of the present invention is **characterized in that** a catalyst is supported on a silk burned product, which is obtained by burning and carbonizing a silk material at temperature of 1,000 °C or below. The harmful substance decomposer excels in the capability of absorbing, decomposing and deodorizing harmful substances, such as foul odor, waste gas, dioxin, VOC and harmful air pollutants. Specifically, since the silk material is burned at the low temperature, flexibility can be maintained so that the silk burned product becomes feasible to cope with various configurations; thus, the harmful substance decomposer can be appropriately used as, for example, filters of fan heaters, air conditioners, automobiles and other equipments.

## Description

### FIELD OF TECHNOLOGY

The present invention relates to a harmful substance decomposer and a method of producing the harmful substance decomposer.

### BACKGROUND TECHNOLOGY

In Patent Document 1, a silk burned product, which is produced by burning and carbonizing a silk material, is used as a material for shielding electromagnetic waves.

The silk burned product is formed by the steps of: primary-burning the silk material at low temperature, e.g., 400-450 °C; cooling the silk material; and secondary-burning the silk material at temperature of 1100-1200 °C.

Note that, the Patent Document 1 is Japanese Patent Gazette No. 2002-220745.

### DISCLOSURE OF THE INVENTION

The inventors of the present invention studies various uses of silk burned products, and they found that a silk burned product, which was burned at low temperature, i.e., 1000°C or below, had sorbability and an antibacterial property and that the silk burned product absorbed and deodorized harmful substances by supporting a catalyst thereon.

The harmful substance decomposer of the present invention is characterized by including a catalyst supported on a silk burned product, which is formed by burning and carbonizing a silk material at temperature of 1,000°C or below.

By burning at low temperature, nitrogenous components derived from amino acids remain in high proportion; absorbing property and antibacterial property are exhibited. Preferably, the silk burned product includes 18-35 wt% of nitrogen elements.

Preferably, the silk burned product is activation-treated so as to form many micro fine holes in a surface thereof, so that surface area can be broadened and the property of absorbing harmful substances can be improved.

The catalyst may be platinum, phthalocyanine or titanium oxide.

By providing electrodes to both ends of the decomposer, temperature of the decomposer can be risen to 100 °C for several seconds, so catalytic action of platinum can be accelerated.

The method of producing a harmful substance decomposer of the present invention comprises the steps of: primary-burning a silk material with temperature rising rate of 100 °C/hour or less until reaching a first temperature; maintaining the first temperature for several hours; secondary-burning the silk material with temperature rising rate of 100 °C/hour or less until reaching a second temperature, which is higher than the first temperature and which is 1,000 °C or below; maintaining the second temperature for several hours; cooling the silk material, which has been secondary-burned, until reaching the room temperature; and supporting a catalyst on the silk material, which has been secondary-burned, and the above steps are performed in an inert gas atmosphere. Preferably, the silk material, which has been primary-burned, is once cooled until reaching the room temperature, then the silk material is secondary-burned.

The supported catalyst may be platinum, phthalocyanine or titanium oxide.

Preferably, the temperature rising rate in the primary-burning step and the secondary-burning step is 50°C/hour or less.

Further, the method may further comprise the step of exposing the silk material, which has been secondary-burned, to high-temperature steam as an activation treatment.

### EFFECTS OF THE INVENTION

In the present invention, The harmful substance decomposer excels in the capability of absorbing, decomposing and deodorizing harmful substances, such as foul odor, waste gas, dioxin, VOC and harmful air pollutants.

Specifically, since the silk material is burned at the low temperature, flexibility can be maintained so that the silk burned product becomes feasible to cope with various configurations; thus, the harmful substance decomposer can be appropriately used as, for example, filters of fan heaters, air conditioners, automobiles and other equipments.

### BRIEF DESCRIPTION OF THE DRAWINGS

Fig. 1 is a raman spectrum chart of a burned product, which was produced by burning a coarse-grained silk at temperature of 2,000 °C.
Fig. 2 is a raman spectrum chart of a burned product, which was produced by burning a coarse-grained silk at temperature of 700 °C.
Fig. 3 is a raman spectrum chart of a burned product, which was produced by burning a coarse-grained silk at temperature of 1,000 °C.
Fig. 4 is a raman spectrum chart of a burned product, which was produced by burning a coarse-grained silk at temperature of 1,400 °C.
Fig. 5 is a FE-SEM photograph of a silk material burned at temperature of 700 °C.
Fig. 6 is a FE-SEM photograph of a silk material burned at temperature of 2,000 °C.
Fig. 7 is a gas chromatography graph of gas components of cigarette tar (no platinum is supported on a silk burned product).
Fig. 8 is a gas chromatography graph of gas components of cigarette tar (3 wt% of platinum is supported on a silk burned product).
Fig. 9 is a gas chromatography graph of gas components of cigarette tar (0.3 wt% of platinum is supported on a silk burned product).
Fig. 10 is graphs showing properties of absorbing and decomposing a hydrogen sulfide performed by silk burned products, which respectively include phthalocyanine as a catalyst and no phthalocyanine.

### PREFERRED EMBODIMENTS OF THE INVENTION

The harmful substance decomposer of the present invention is obtained by burning a silk material at relatively low temperature, i.e., 1,000°C or below and supporting a catalyst thereon.

In the following description, silk materials include woven fabrics, knitted works, powders, cloth, strings, etc. made of threads of domesticated or wild silk worms. The silk burned product is produced by burning the silk material or materials.

The silk material should be burned at 1,000 °C or below. A burning atmosphere should be an inert gas atmosphere, e.g., nitrogen gas atmosphere, argon gas atmosphere, or a vacuum atmosphere so as not to burn the silk material to cinders.

Suitable catalysts are platinum, phthalocyanine and titanium oxide.

The silk material should be burned in stages without rapid burning.

For example, the silk material is primary-burned in the inert gas atmosphere with low temperature rising rate of 100 °C/hour or less, preferably 50 °C /hour or less, until reaching a first temperature (e.g., 500 °C), then the first temperature is maintained for several hours. The silk material is once cooled until reaching the room temperature, then the silk material is secondary-burned in the same atmosphere with low temperature rising rate of 100 °C/hour or less, preferably 50 °C/hour or less, until reaching a second temperature (e.g., 700 °C) and the second temperature is maintained for several hours. Then, the silk material or the silk burned product is cooled until the room temperature and taken out from a furnace. Note that, the silk material may be secondary-burned without cooling after the primary-burning.

Burning conditions are not limited to the above described embodiment, they may be optionally changed on the basis of kinds of silk materials, functions of silk burned products, etc..

By burning the silk material in stages, burning with the low temperature rising rate and burning at 1,000°C or below, rapid decomposition of a protein high-order structure, in which crystalline forms and noncrystalline forms of a dozen of amino acids are combined, can be avoided, especially variety of functions can be produced by remaining of nitrogenous components in high proportion.

By burning the silk material at low temperature, e.g., 500-1,000 °C, the soft (flexible) and glossy black silk burned product can be produced without being graphitized.

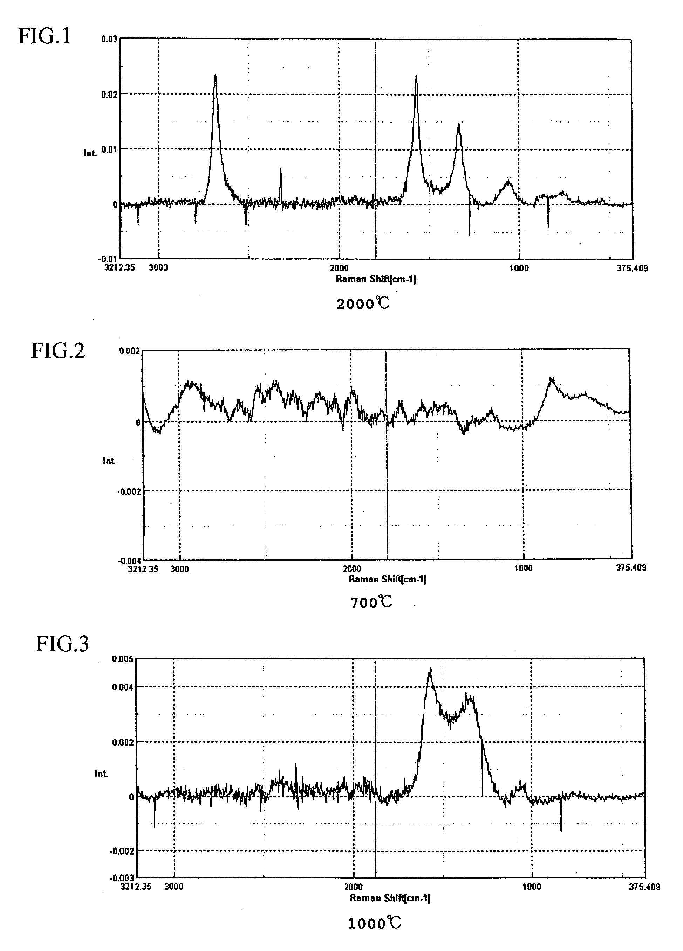

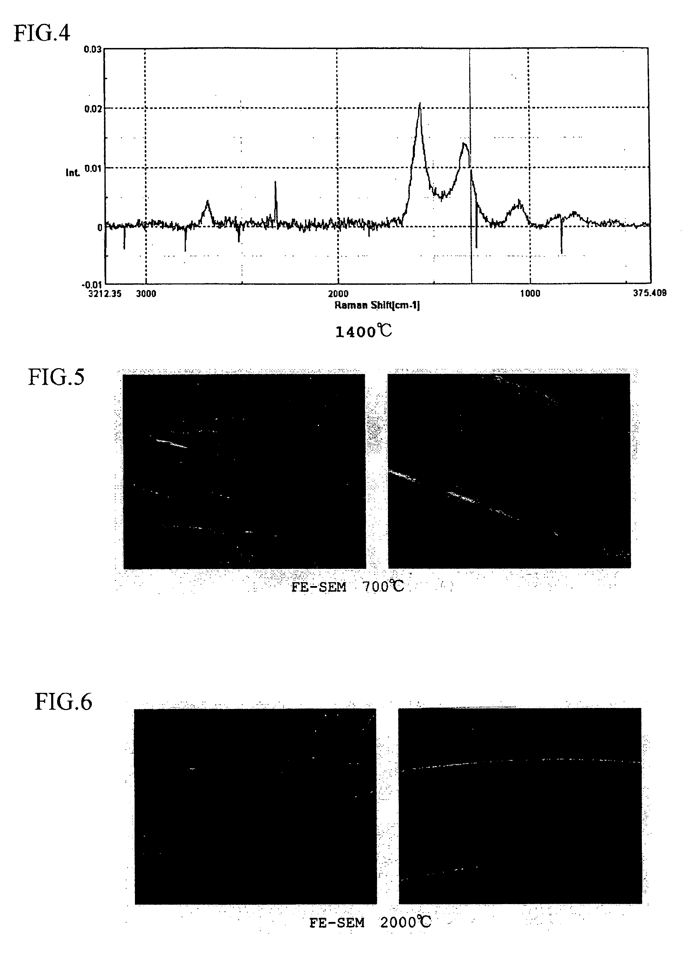

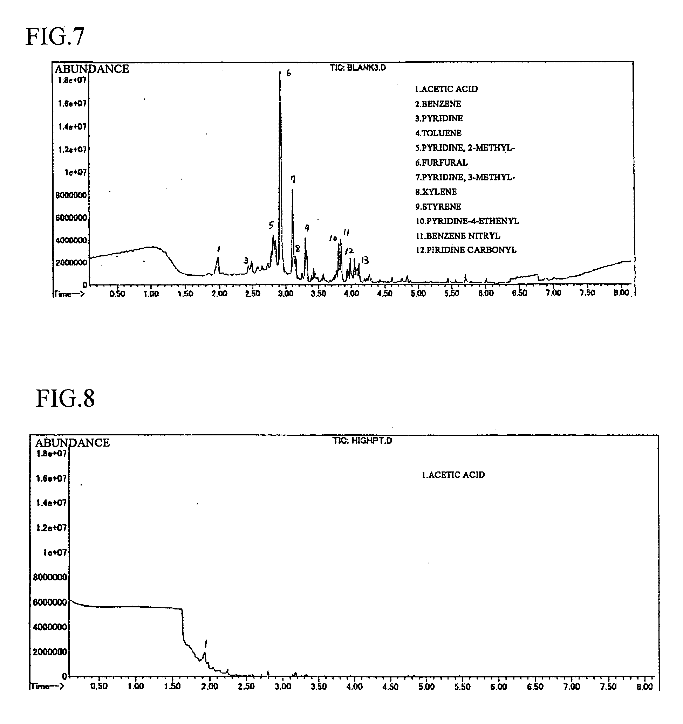

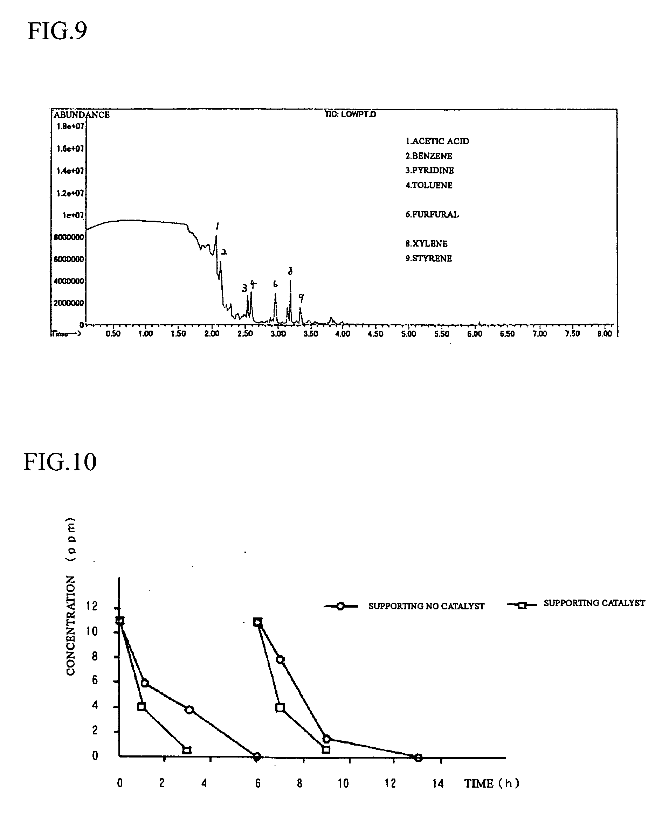

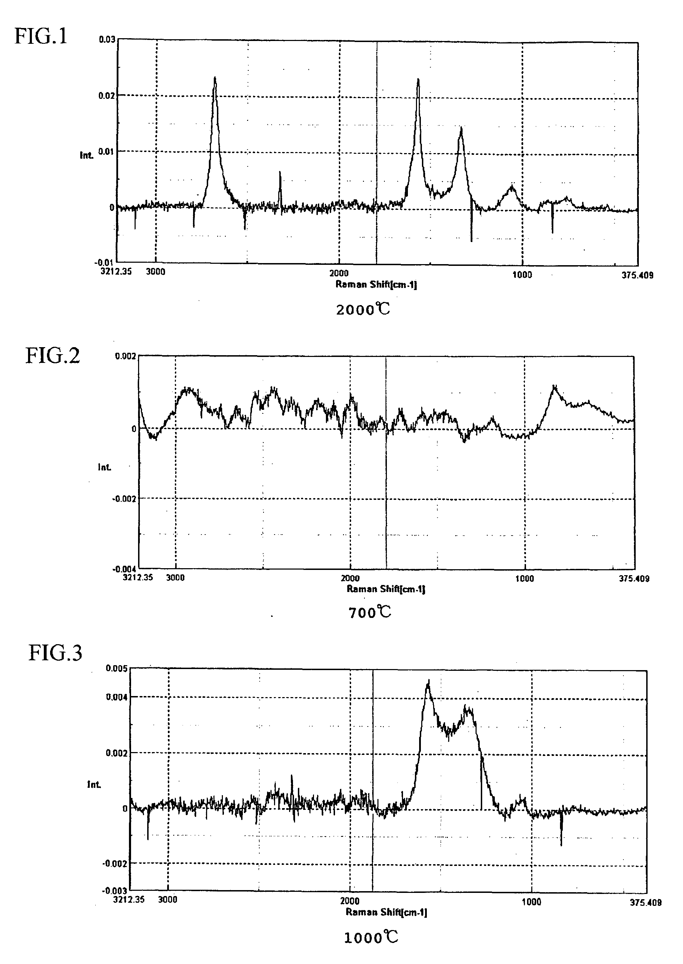

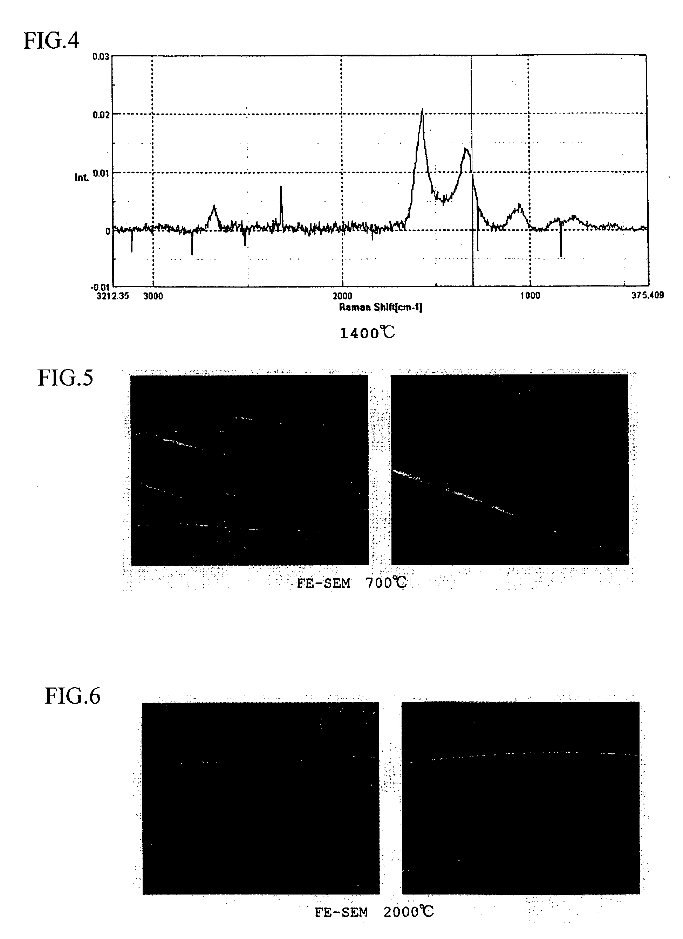

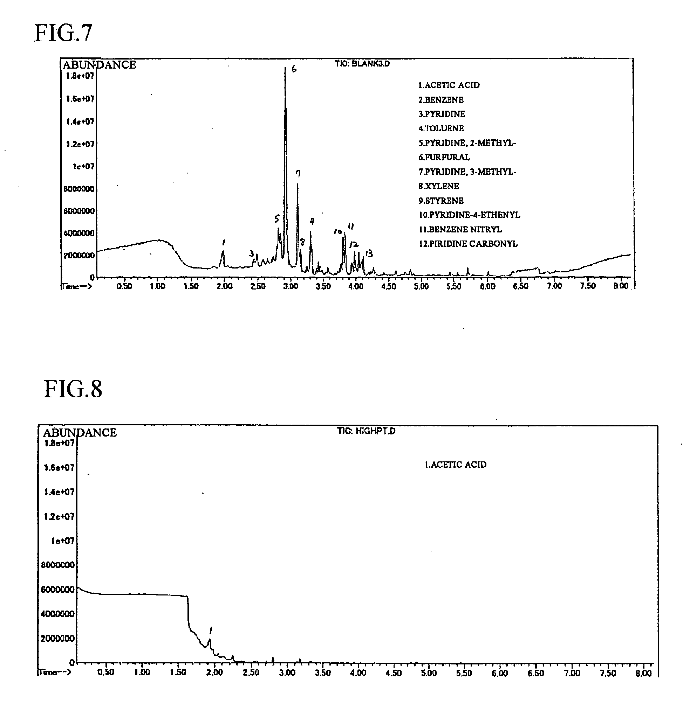

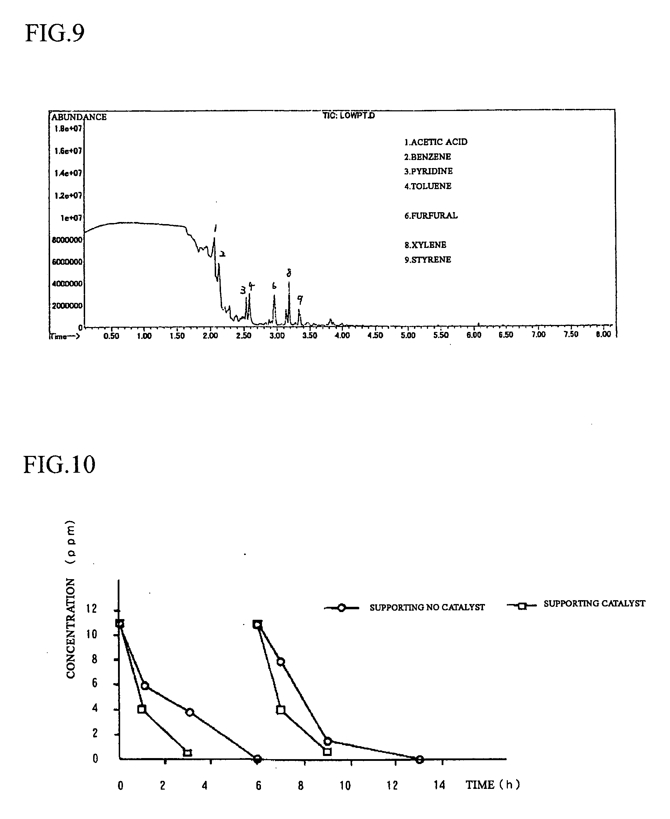

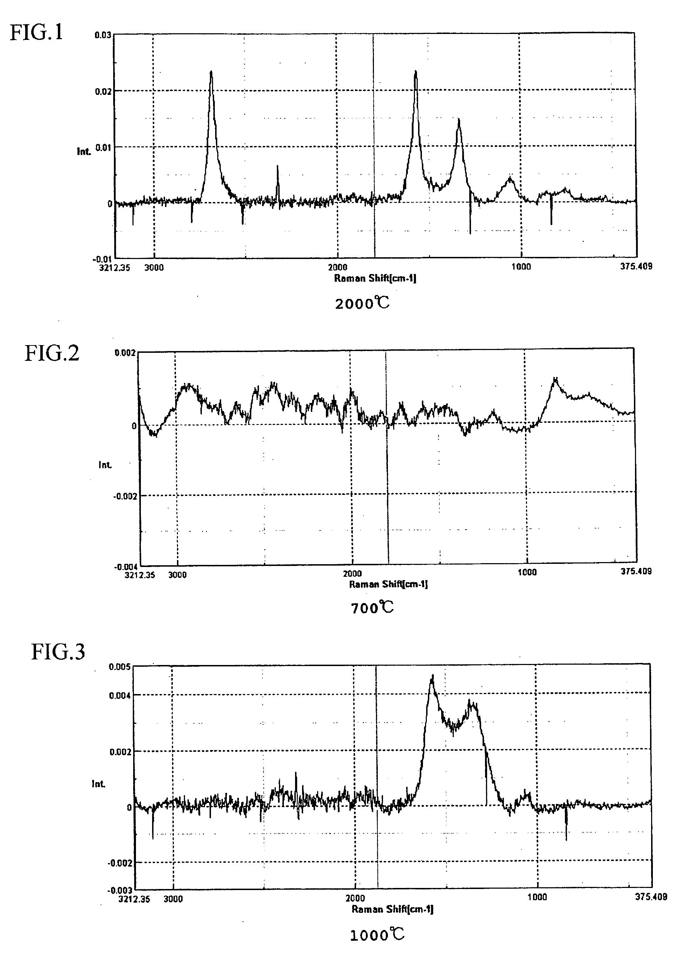

Fig. 1 is a raman spectrum chart of a burned product, which was produced by burning a coarse-grained silk at temperature of 2,000 °C. Peaks were observed at 2681cm⁻¹, 1570cm⁻¹ and 1335cm⁻¹, so the coarse-grained silk was graphitized.

Figs. 2-4 are raman spectrum charts of burned products, which were produced by respectively burning coarse-grained silks at 700 °C, 1,000 °C and 1,400°C. By burning at 1,400 °C, intensities were low but peaks were observed at the same three points. By burning at 1,000□ or below, no high peaks were observed, so the burned products were not graphitized.

**(Table 1)**

| Elements | C | N | O | Na | Mg | Al | Si | P | S | Cl | K | Ca | Fe |
|---|---|---|---|---|---|---|---|---|---|---|---|---|---|
| Wt% | 66.1 | 27.4 | 2.1 | 0.1 | 0.3 | 0.1 | 0.3 | 0.1 | 0.1 | 0.1 | 0.1 | 3.2 | 0.2 |

Table 1 shows results of elemental analysis (semiquantative analysis) of a burned product, which was a knitted work made of silk of domesticated silkworms and which was burned in a nitrogen atmosphere at 700 °C, performed by an electron beam micro analyzer.

Measuring conditions were as follows: accelerating voltage was 15 kV; irradiating current was 1 µA; and probe diameter was 100 µm. Note that, values in the table indicate tendency of detected elements but they are not guaranteed values.

According to Table 1, a large amount of nitrogen, i.e., 27.4 wt%, was remained. Further, other elements derived from amino acids were also remained.

**(Table 2)**

| Elements | C | N | O | Na | Mg | Al | Si | P | S | Cl | K | Ca |
|---|---|---|---|---|---|---|---|---|---|---|---|---|
| Wt% | 74.6 | 15.7 | 5.1 | 0.3 | 0.3 | 0.1 | 0.7 | 0.1 | 0.2 | 0.2 | 0.1 | 2.7 |

Table 2 shows results of elemental analysis (semiquantative analysis) of a burned product, which was a knitted work made of silk of domesticated silkworms and which was burned in a nitrogen atmosphere at 1,400 °C, performed by the electron beam micro analyzer.

Measuring conditions were as follows: accelerating voltage was 15 kV; irradiating current was 1 µA; and probe diameter was 100 µm. Note that, values in the table indicate tendency of detected elements but they are not guaranteed values.

According to Table 2, a residual amount of nitrogen was reduced to 15.7 wt%.

**(Table 3)**

| Elements | C | N | O | Na | Mg | Al | Si | P | S | K | Ca |
|---|---|---|---|---|---|---|---|---|---|---|---|
| Wt% | 69.9 | 24.5 | 2.7 | 0.2 | 0.3 | 0.0 | 0.2 | 0.2 | 0.4 | 0.1 | 1.6 |

Table 3 shows results of elemental analysis (semiquantative analysis) of a burned product, which was an unwoven cloth made of silk of domesticated silkworms and which was burned in a nitrogen atmosphere at 700 °C, performed by the electron beam micro analyzer.

Measuring conditions were as follows: accelerating voltage was 15 kV; irradiating current was 1 µA; and probe diameter was 100 µm. Note that, values in the table indicate tendency of detected elements but they are not guaranteed values.

According to Table 3, a large amount of nitrogen, i.e., 24.5 wt%, was remained.

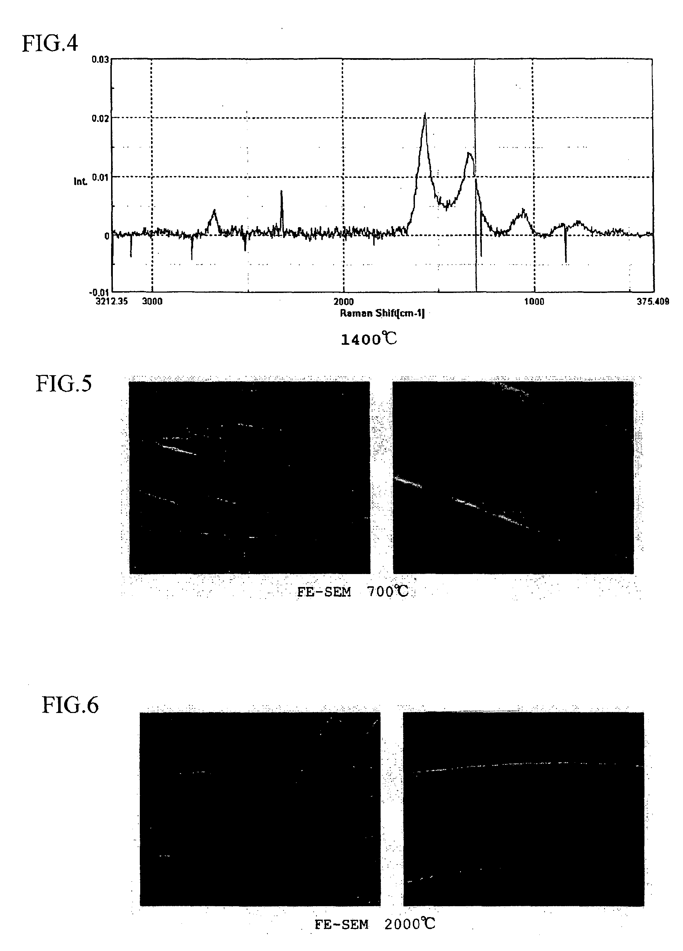

Fig. 5 is a FE-SEM photograph of a silk material burned at temperature of 700□. A surface of the burned silk material is covered with thin films, which are burned residue derived from amino acids, e.g., nitrogen elements.

On the other hand, Fig. 6 is a FE-SEM photograph of a silk material burned at temperature of 2,000 °C, but the surface of the burned silk material is clear and covered with no films.

**(Table 4)**

| Bacteria | Number of Inoculating Bacteria | Number of Bacteria in Untreated Cloth | Number of Bacteria in Sample | Sterilization Activity Value | Bacteriostatic Activity Value |
|---|---|---|---|---|---|
| Staph Bacteria | 4.3 2.2E+04 | 7.1 1.2E+07 | 1.3 2.0E+01 | 3.0 | 5.8 |
| Klebsiella Pneumoniae | 4.4 2.6E+04 | 7.5 3.0E+07 | 1.3 2.0E+01 | 3.1 | 6.2 |
| MRSA | 4.4 2.6E+04 | 7.1 1.4E+07 | 1.3 2.0E+01 | 3.1 | 5.8 |
| Coli Bacteria | 4.3 1.8E+04 | 7.5 2.9E+07 | 1.3 2.0E+01 | 3.0 | 6.2 |
| Pseudomonas aeruginosa | 4.2 1.7E+04 | 7.0 1.1E+07 | 1.3 2.0E+01 | 2.9 | 5.7 |

Table 4 shows results of antibacterial tests of burned products, which were woven fabrics of domesticated silkworms and which were burned in a nitrogen atmosphere at temperature of 700 °C.

The tests were JIS L 1902 quantative tests (unified tests).

Standard cotton cloth was used as the untreated cloth. "Number of Bacteria in Untreated Cloth" means number of bacteria, which have been inoculated and grown in the unburned cloth.

For example, "2.2E+04" in the table is 2.2×10⁴, and the value "4.3" is a logarithm value thereof.

According to Table 4, bacteria considerably grew in the untreated cloth; on the other hand, all bacteria were considerably reduced in samples, i.e., burned cloth, so that we found that the burned product had an antibacterial property.

By burning silk materials in a plurality of stages, burning them at 1,000□ or below and rising temperature with low temperature rising rate, a large amount of elements derived from amino acids, e.g., nitrogen elements remained in the samples so that the samples could have the antibacterial property.

Since the silk burned product has the antibacterial property, the product can be appropriately used as a material of a mask, etc..

In the harmful substance decomposer of the present invention, the catalyst is supported on the silk burned product, which has been produced the above described method.

The suitable catalysts are platinum, phthalocyanine and titanium oxide.

The catalyst can be supported by an ordinary process.

For example, the silk burned product is pretreated, by soaking into a nitric acid solution or a hydrogen peroxide solution, and dried, then a chloroplatinic acid solution is applied to the silk burned product or the silk burned product is soaked into the chloroplatinic acid solution so as to support platinum on the silk burned product. Similarly, phthalocyanine or titanium oxide is supported on the silk burned product by spraying a phthalocyanine solution or a titanium oxide solution onto the silk burned product or by soaking the silk burned product into the solution.

In another case, the surface of the silk burned product may be activation-treated so as to form many holes and broaden surface area, so that a property of absorbing harmful substances can be improved. Note that, when absorbing capacity is saturated, an ordinary burned product cannot absorb harmful substances; in the silk burned product of the present embodiment, the harmful substances, which have been absorbed, are decomposed by the catalyst so that the absorbing property can be carried on.

The decomposing function of the catalyst is well known; for example, platinum is capable of decomposing and deodorizing almost all of harmful substances by heating to 10 °C or above. Especially, platinum effectively decomposes ammonia, trimethylamine, skatole, indole, nicotine, acetaldehyde, phenol, etc..

To heat the harmful substance decomposer in which platinum is supported, electrodes (not shown) are respectively provided to both ends of the harmful substance decomposer, and electricity is applied to the electrodes.

As described above, the silk burned product, which has been burned at 1,000□ or below, is not graphitized, but it has electric conductivity, which is lower than that of graphite. Namely, the silk burned product has electric resistance, so it can be self-heated by applying electricity.

According to experiments, the silk burned product was rapidly heated to about 120 °C for one or two seconds by inputting proper voltage and further heated to about 200 °C for seven seconds. Namely, the silk burned product had high thermal responsiveness.

The silk burned product, which is burned at that low temperature, can resist to about 420 °C, and it is not broken in pieces.

In an ordinary kerosene fan heater, for example, it takes about several seconds to ignite from turning a switch on, so bad smell comes out; on the other hand, in a fan heater including a filter, which is constituted by the harmful substance decomposer having the electrodes and which is provided in an exhaust gas pipe, if electricity is immediately applied to the filter when the fan heater is turned on, the filter is rapidly heated so that the catalyst can effectively decompose and deodorize odorous components of a fuel gas.

To produce the filter-type harmful substance decomposer, a sheet-shaped silk material, which is woven cloth, knitted fabric, powders or unwoven cloth, is used. Even if the catalyst is supported on the sheet-shaped silk burned product, flexibility of the product can be maintained so that the product becomes feasible to cope with various configurations; thus, the harmful substance decomposer can be appropriately used as filters.

Besides the filter of the fan heater, the harmful substance decomposer may be appropriately used as filters of air conditioners and other equipments.

In case of supporting phthalocyanine, the phthalocyanine acts as the catalyst at the room temperature. Phthalocyanine is suitably used for decomposing sulfuric compounds, so it is capable of effectively decomposing and deodorizing methyl mercaptan, hydrogen sulfide, disulfide, skatole, nicotine, acetaldehyde, phenol, etc..

In case of supporting titanium oxide as the catalyst, the titanium oxide decomposes and deodorizes almost all of harmful substances in the presence of ultraviolet rays as you know. Especially, titanium oxide is capable of effectively decomposing and deodorizing methyl mercaptan, hydrogen sulfide, ammonia, trimethylamine, disulfide, nicotine, etc..

The sheet-shaped harmful substance decomposers including the above described catalysts can be effectively used as filters.

### Example 1

Silk material were heated in a nitrogen gas atmosphere until reaching first temperature (450 °C) with low temperature rising rate of 50 °C/hour, then the materials were burned at the first temperature for five hours as the primary burning. Next, the burned materials were once cooled until reaching the room temperature, then the materials were reheated in the nitrogen gas atmosphere until reaching second temperature (700 °C) with low temperature rising rate of 50 °C/hour, then the materials were burned at the second temperature for five hours as the secondary burning. Further, the burned materials were cooled until reaching the room temperature, so that the silk burned products shown in Fig. 5 were produced.

The silk burned products were exposed to steam, whose temperature was 850 °C, as the activation treatment, so that many micro fine holes (diameters 0.1-several dozen nm) were formed in the surface of each silk burned product; the surface area of the silk burned product could be broadened about 1,000 times.

The silk burned products were pretreated, by soaking into a nitric acid solution or a hydrogen peroxide solution, then a chloroplatinic acid solution, a phthalocyanine solution or a titanium oxide solution was applied or sprayed to the silk burned products or the silk burned products were soaked into the solution, and the silk burned products were dried so as to obtain the harmful substance decomposers supporting the catalysts.

All of the harmful substance decomposers effectively absorbed, decomposed and deodorized harmful substances.

A test for decomposing cigarette tar (tar components) was performed with a silk burned product supporting platinum as the catalyst and another silk burned product supporting no platinum.

Firstly, a cigarette was burned in a closed box, in which silk burned products (no platinum, 3 wt% of platinum and 0.3 wt% of platinum were respectively supported) were accommodated, so as to stick cigarette tar on the silk burned products. The silk burned products, on which cigarette tar had stuck, were respectively accommodated in bags and heated by heating means (not shown), then gasses formed therein were analyzed by gas chromatography.

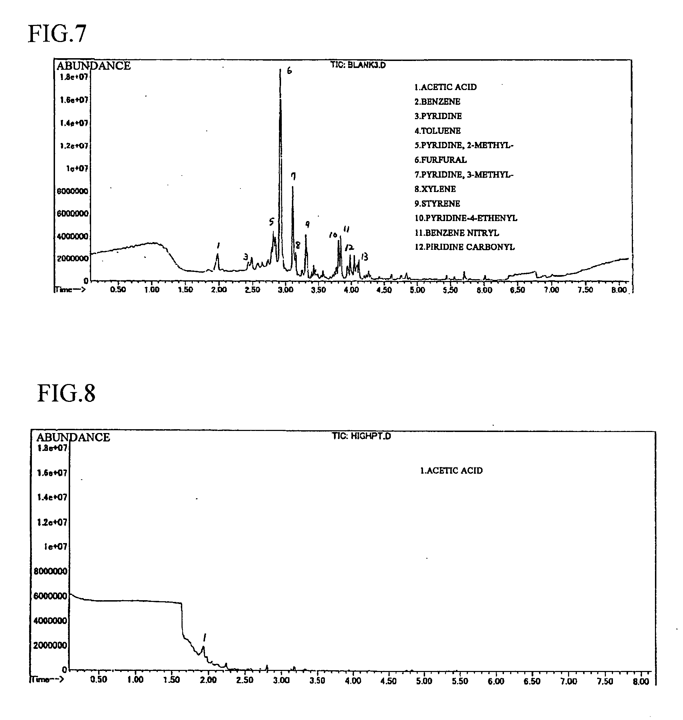

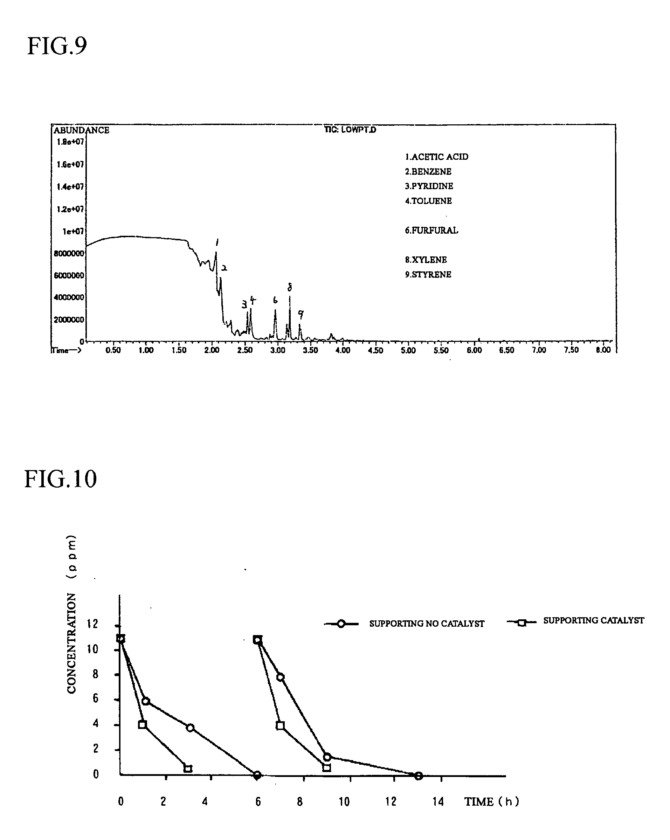

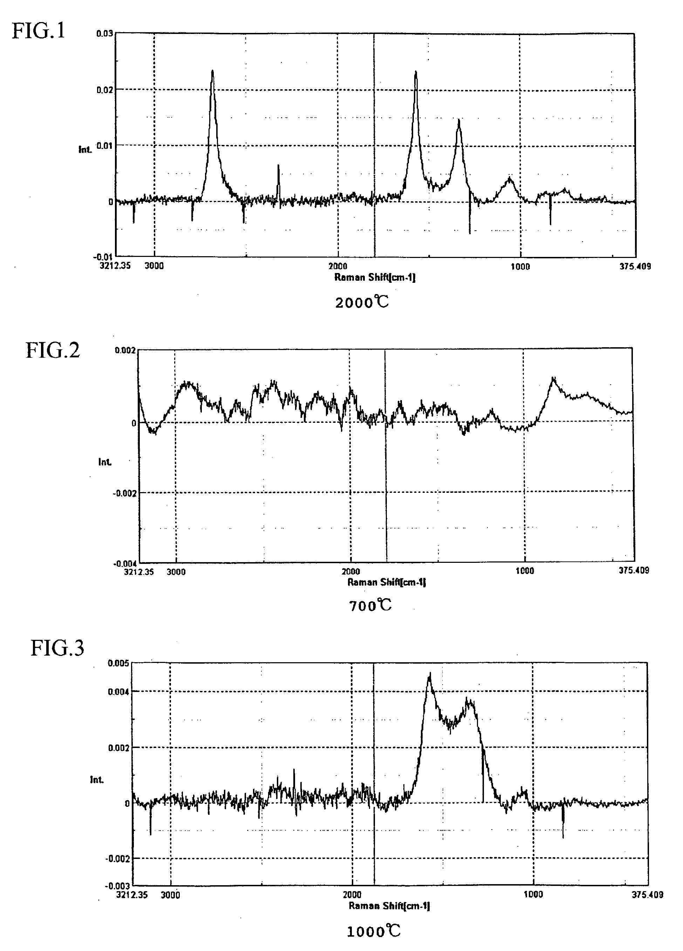

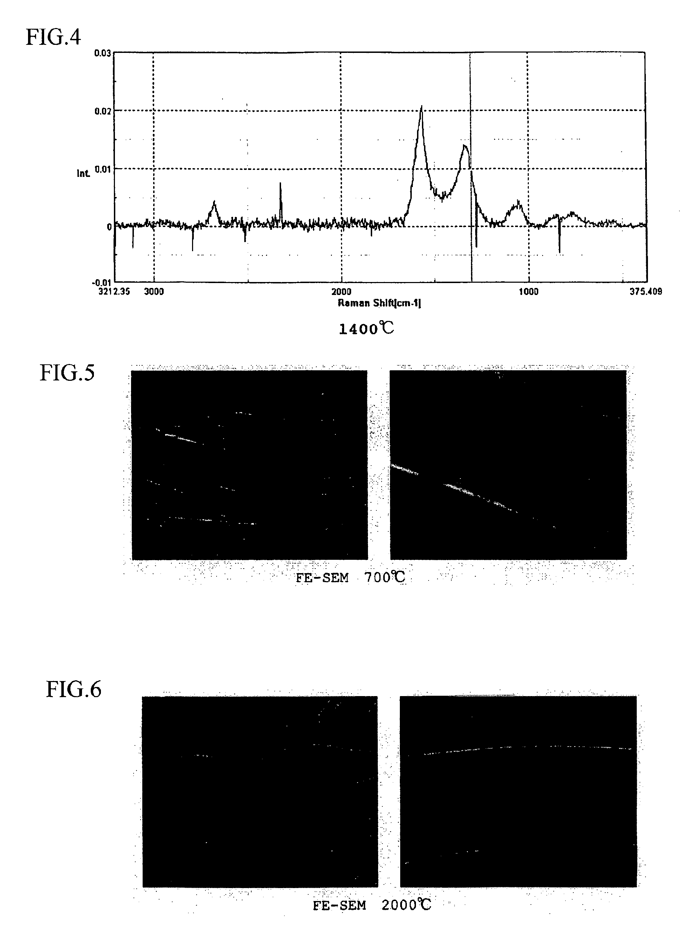

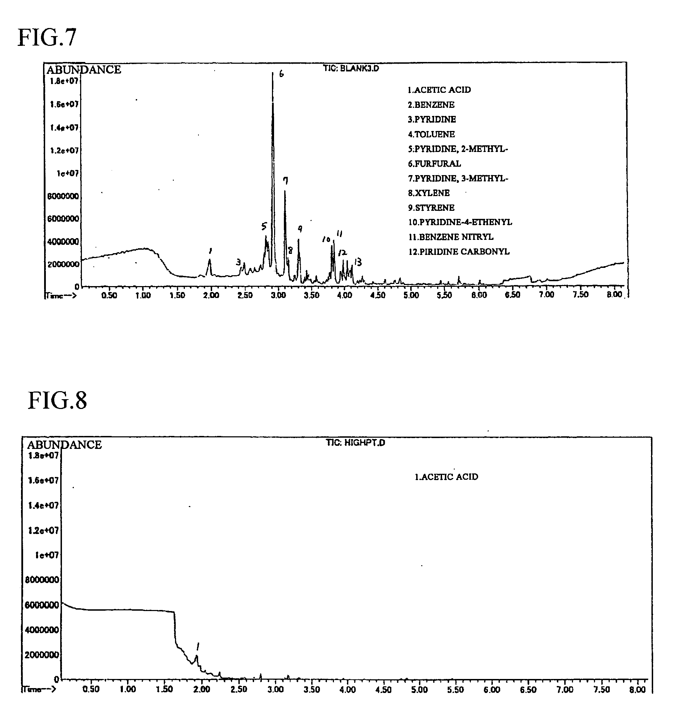

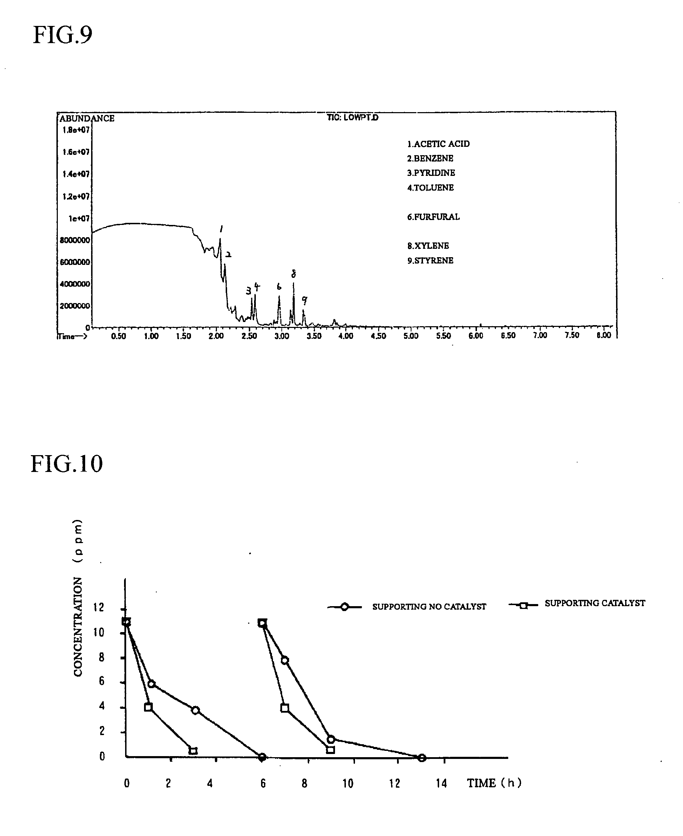

Fig. 7 is a gas chromatography graph of gas components of cigarette tar stuck on the silk burned product supporting no platinum; Fig. 8 is a gas chromatography graph of gas components of cigarette tar stuck on the silk burned product supporting 3 wt% of platinum; and Fig. 9 is a gas chromatography graph of gas components of cigarette tar stuck on the silk burned product supporting 0.3 wt% of platinum. In case of using the silk burned product supporting no platinum (see Fig. 7), the tar stuck on the silk burned product was formed into the gas by the heat. Namely, the tar was not decomposed. On the other hands, in cases of using the silk burned products supporting platinum, especially the silk burned product supporting 3 wt% of platinum, the platinum catalyst was activated by the heat, so that the tar was decomposed and no gas was formed (see Fig. 8).

Fig. 10 shows graphs showing properties of absorbing and decomposing a hydrogen sulfide performed by silk burned products, which respectively include phthalocyanine as a catalyst and no phthalocyanine.

In this experiment, small quantities of the silk burned products were accommodated in bags, whose capacities were five liters, and a hydrogen sulfide gas having prescribed concentration was introduced into the bags, then variations of the gas concentration in the bags were measured for a prescribed time elapsed.

According to Fig. 10, rates of absorbing and decomposing the hydrogen sulfide gas by the silk burned product supporting phthalocyanine was higher than those by the silk burned product supporting no phthalocyanine. Further, when the concentration was 0 ppm and the hydrogen sulfide gas was introduced into the bag again, the rates of absorbing and decomposing the hydrogen sulfide gas by the silk burned product supporting phthalocyanine was higher than those by the silk burned product supporting no phthalocyanine, as well.

## Claims

1. A harmful substance decomposer including a catalyst supported on a silk burned product, which is formed by burning and carbonizing a silk material at temperature of 1,000 °C or below.

2. The harmful substance decomposer according to claim 1, wherein said silk burned product includes 18-35 wt% of nitrogen elements.

3. The harmful substance decomposer according to claim 1 or 2, wherein said silk burned product is activation-treated so as to form many micro fine holes in a surface thereof.

4. The harmful substance decomposer according to one of claims 1-3, wherein said catalyst is platinum.

5. The harmful substance decomposer according to one of claims 1-3, wherein said catalyst is phthalocyanine.

6. The harmful substance decomposer according to one of claims 1-3, wherein said catalyst is titanium oxide.

7. The harmful substance decomposer according to claim 4, wherein electrodes are provided to both ends.

8. A method of producing a harmful substance decomposer,
comprising the steps of:
primary-burning with temperature rising rate of 100°C/hour or less until reaching a first temperature and maintaining the first temperature for several hours;
secondary-burning with temperature rising rate of 100 °C/hour or less until reaching a second temperature, which is higher than the first temperature and which is 1,000 °C or below, and maintaining the second temperature for several hours;
cooling the material, which has been secondary-burned, until reaching the room temperature; and
supporting a catalyst on the material, which has been secondary-burned,
wherein said steps are performed in an inert gas atmosphere.

9. The method according to claim 8, wherein the material, which has been primary-burned, is once cooled until reaching the room temperature, then the material is secondary-burned.

10. The method according to claim 8 or 9, wherein the catalyst is platinum, phthalocyanine or titanium oxide.

11. The method according to claim 8 or 9, wherein the temperature rising rate in the primary-burning step and the secondary-burning step is 50 °C/hour or less.

12. The method according to claim 7, 8 or 9, further comprising the step of exposing the material, which has been secondary-burned, to high-temperature steam as an activation treatment.
